# EUROPEAN PATENT APPLICATION

(11) **EP 2 866 431 A1**
(43) Date of publication of application: **29.04.2015**
(21) Application number: 14002911.7
(22) Date of filing: 22.08.2014
(51) Int. Cl.: H04N 5/222, G06T 11/00, G06T 13/40

(54) **Image outputting device**

(30) Priority: 22.10.2013 KR 20130126069
(71) Applicant: LG Electronics, Inc., Seoul 150-721 (KR)
(72) Inventor: Choi, Sooin, 137-893 Seoul (KR); Choi, Sogi, 137-893 Seoul (KR); Lee, Hyojung, 137-893 Seoul (KR); Lee, Hyunju, 137-893 Seoul (KR)
(74) Representative: Katérle, Axel

(57) **Abstract**

An image outputting device according to the present invention may perform a dual-recording function of recording both content being reproduced and a viewer's image based on additional information of the content being reproduced, the viewer's facial expression, or gesture.

## Description

### CROSS-REFERENCE TO RELATED APPLICATIONS

This application claims the benefit of earlier filing date and right of priority to Korean Patent Application No. 10-2013-0126069, filed on 22 October, 2013, the contents of which are incorporated by reference herein in their entirety.

### BACKGROUND OF THE INVENTION

### TECHNICAL FIELD

The present invention relates to an image outputting device, and more specifically, to an image outputting device that may record content being reproduced, together with a viewer's image.

### DISCUSSION OF THE RELATED ART

An image outputting device such as a TV reproducing content provides a function for recording content. Further, at the present time that IPTVs or other bi-directional communication broadcast are actively in service, more attention is directed to offering a function for recording images of a viewer viewing content as well as a function of recording the content being reproduced in such an image outputting device.

### SUMMARY

An object of the present invention is to provide an image outputting device that may provide a "dual-recording" function for performing recording on both a viewer's image and content being reproduced.

An object of the present invention is directed to an image outputting device that may provide various functions using the data stored as a result of performing the dual-recording function.

To achieve the above objects, according to an embodiment of the present invention, an image outputting device may comprise a camera configured to obtain a viewer's image; an output unit configured to reproduce content; and a controller configured to perform a dual-recording function on the viewer's image and content being reproduced through the output unit, based on at least one of additional information of the content being reproduced and a result of analyzing the viewer's image obtained.

The controller is configured to determine a period during which the dual-recording function is performed, based on a highlight period contained in the additional information of the content being reproduced. The controller is configured to determine the period during which the dual-recording function is performed, based on a time of reproducing the content being reproduced, corresponding to predetermined specific text in caption information contained in the additional information of the content being reproduced. The controller is configured to perform the dual-recording function when, as the result of analyzing the viewer's image, the viewer's predetermined facial expression or gesture is recognized.

The controller is configured to display an indication means for indicating a time or period when the dual-recording function is performed, in association with a control region corresponding to the content being reproduced.

The image outputting device may further comprise a microphone, wherein the controller is configured to further record a sound signal received through the microphone during the period when the dual-recording function is performed and is configured to store the recorded sound signal separately from a sound signal of the content being reproduced.

The controller is configured to store the viewer's image recorded as a result of performing the dual-recording function in combination with an image of the content being reproduced or independently from the content being reproduced, according to configurations.

When a plurality of viewers are recognized as the result of analyzing the image obtained through the camera, the controller is configured to perform the dual-recording function on a viewer making a specific facial expression or a specific gesture among the plurality of viewers or to alternately perform the dual-recording function on the plurality of viewers.

The controller is configured to display on a display unit the viewer's image obtained by the camera together with the content being reproduced and is configured to change a form in which the viewer's image is displayed at a time or period of performing the dual-recording function.

To achieve the above objects, according to another embodiment of the present invention, an image outputting device may comprise a memory; a user input unit; a camera configured to obtain a viewer's image; an output unit configured to reproduce content; and a controller configured to perform a dual-recording function on specific content being reproduced through the output unit and the viewer's image, to store the viewer's image recorded as a result of performing the dual-recording function in the memory in association with the specific content, and to display on a display unit included in the output unit an indication means for indicating that the dual-recording function has been performed, in association with the specific content.

When the specific content is reproduced, the controller is configured to display an indication means for indicating that there is a viewer's image recorded in association with the specific content, on a control region corresponding to the specific content.

The controller is configured to provide a thumbnail image corresponding to the recorded viewer's image, on a region adjacent to a progress bar corresponding to a region corresponding to a time or period of recording the viewer's image as the dual-recording function is performed.

As the dual-recording function is performed, the controller is configured to display a progress bar in such a manner that a portion of the progress bar, corresponding to a time or period of recording the viewer's image, is visually distinguished from another portion of the progress bar.

The controller is configured to provide a searching function on the recorded viewer's image and the specific content based on selection of the indication means.

When the dual-recording function has been performed on a plurality of viewers, the controller is configured to provide respective indication means for the plurality of viewers in such a manner that the indication means are distinguished from each other.

An image outputting device according to the present invention may provide a "dual-recording" function for performing recording on both a viewer's image and content being reproduced.

The image outputting device according to the present invention may provide various functions using the data stored as a result of performing the dual-recording function.

An additional scope of applicability of the present invention will be apparent from the following detailed description. However, it may be appreciated by those of ordinary skill in the art that various changes and modifications may be made thereto without departing from the spirit and scope of the present invention, and it should be noted that the specific embodiments set forth herein are provided only for an example.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.
Fig. 1 is a block diagram illustrating an image outputting device according to the present invention.
Fig. 2 is a flowchart illustrating an example method for driving an image outputting device according to the present invention, in order to perform a dual-recording function.
Figs. 3 and 4 show an example of performing a dual-recording function according to the method for driving the image outputting device as shown in Fig. 2.
Figs. 5 to 7 illustrate example user interfaces provided while a dual-recording function is performed in an image outputting device according to the present invention.
Fig. 8 shows a process of performing a dual-recording function based on a user's manipulation in an image outputting device according to the present invention.
Fig. 9 shows a form in which a content image and a viewer's image are provided in an image outputting device according to the present invention while a dual-recording function is performed.
Fig. 10 shows examples of providing an indication means for indicating that a dual-recording function is performed in an image outputting device according to the present invention.
Figs. 11 and 12 show various forms of the dual-recording function performed in an image outputting device according to the present invention in case a plurality of viewers are recognized.
Fig. 13 shows a message provided from an image outputting device 100 according to the present invention in case an additional viewer is recognized.
Fig. 14 shows an example of storing a result of performing a dual-recording function in an image outputting device according to the present invention.
Figs. 15 and 16 show examples of changing the forms of displaying viewer's images in an image outputting device according to the present invention in case a dual-recording function is performed.
Fig. 17 is a flowchart illustrating an example method for driving an image outputting device according to the present invention in case a dual-recording function is performed on specific content and the specific content is reproduced.
Fig. 18 shows examples of the indication means for the content that has gone through dual recording as provided from the image outputting device.
Fig. 19 shows example indication means for indicating performing a dual-recording function provided from an image outputting device according to the present invention in case the dual-recording function is performed while specific content is reproduced and then the content is reproduced.
Fig. 20 shows various examples of indicating performing a dual-recording function in an image outputting device according to the present invention in case the dual-recording function has been performed targeting a plurality of viewers.
Fig. 21 shows example searching functions provided from an image outputting device according to the present invention.
Fig. 22 shows an example searching function provided from an image outputting device according to the present invention.
Fig. 23 shows an example dual-recording function-related function provided from an image outputting device according to the present invention.
Fig. 24 is a view illustrating the configuration of a content providing system according to the present invention.
Fig. 25 shows an example in which an image outputting device according to the present invention displays a result of performing a dual-recording function on a plurality of viewers for a specific drama in interoperation with the VOD providing server.
Figs. 26 and 27 show an example of automatically performing a dual-recording function in an image outputting device according to the present invention.

### DETAILED DESCRIPTION

The foregoing objects, features, and advantages of the present invention may be apparent from the following detailed description taken in conjunction with the accompanying drawings. Hereinafter, preferred embodiments of the present invention will be described with reference to the drawings. The same reference numerals are used to denote the same elements throughout the specification. When determined to make the gist of the present invention unnecessarily unclear, the detailed description of the known art will be omitted.

Hereinafter, image outputting devices according to the present invention will be described in detail with reference to the drawings. As used herein, the terms "module" and "part" are assigned or interchangeably used merely for ease of drafting, and the terms themselves do not have distinguished meanings or roles.

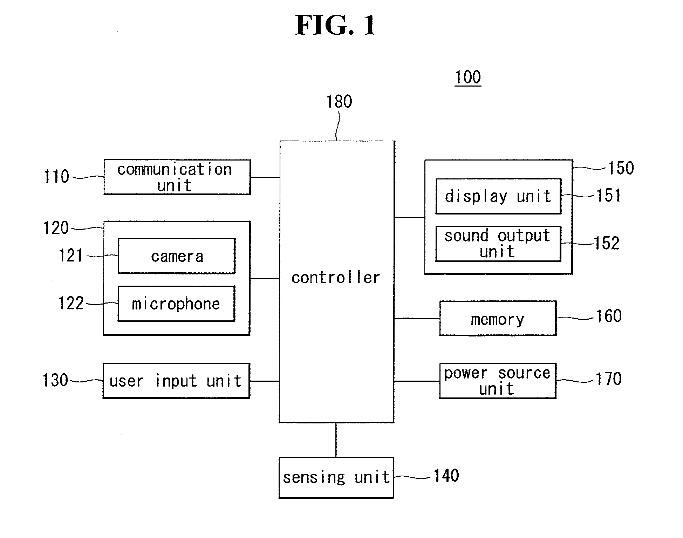

Fig. 1 is a block diagram illustrating an image outputting device 100 according to the present invention. The image outputting device described herein may include a TV, a PC, a digital signage device, etc. However, the scope of the present invention is not limited thereto.

Referring to Fig. 1, the image outputting device 100 includes a communication unit 110, an input unit 120, a user input unit 130, a sensing unit 140, an output unit 150, a memory 160, a power source unit 170, and a controller 180. The components shown in Fig. 1 are not inevitable, and the image outputting device 100 may rather include more or less components than those shown in Fig. 1. Hereinafter, the components are described one-by-one.

The communication unit 110 may include one or more modules that enable wired/wireless communication between the image outputting device 100 and a communication network. For example, the communication unit 110 may include a broadcast receiving module, a mobile communication module, a wireless Internet module, and a near-field communication module. The communication unit 110 may receive a broadcast signal through the communication network.

The input unit 120 is the component for obtaining an audio signal or video signal input from an outside source, and as shown in Fig. 1, may include a camera 121 and a microphone 122. The camera 121 processes an image frame such as a still image or motion image obtained by an image sensor in video call mode or image capturing mode. The microphone 122 receives an external voice signal and processes it into electrical voice data.

The user input unit 130 generates input data for a user to control the operation of the image outputting device 100. The user input unit 130 may include a key pad, a dome switch, a touchpad (resistive/capacitive), a jog wheel, a jog switch, etc.

The sensing unit 140 may sense the current state of the image outputting device 100 or the user's state and may sense an ambient environment state of the image outputting device 100. The data sensed by the sensing unit 140 may be a basis for controlling the operation of the image outputting device 100.

The output unit 150 may output an image signal and a video signal of content reproduced under the control of the controller 180. As shown in Fig. 1, the output unit 150 may include a display unit 151 and a sound output unit 152.

The display unit 151 displays and outputs the information processed by the image outputting device 100. The display unit 151 may be implemented as a liquid crystal display, a thin film transistor-liquid crystal display, an organic light emitting diode display, or a flexible display. The display unit 151 may include a display outputting images and a polarized film filtering an image with a predetermined polarized angle and outputting it.

Further, the display unit 151 may output an image according to a polarized glasses scheme or a shutter-glass scheme in order for the user to recognize a 3D stereoscopic image. However, the schemes for implementing 3D stereoscopic images are not limited to the above examples.

The sound output unit 152 outputs a sound signal associated with a function performed by the image outputting device 100. Such sound output unit 152 may include a receiver, a speaker, a buzzer, etc. Further, the sound output unit 152 may output a sound through an earphone jack.

The memory 160 may store a program for the operation of the controller 180 and may temporarily or permanently retain input/output data. The memory 160 may temporarily or permanently store image data output through the display unit 151 and sound data corresponding thereto.

The memory 160 may include at least one-type storage medium of a flash-type memory, a hard disc-type memory, a multimedia card micro-type memory, a card-type memory (e.g., an SD or XD memory), a RAM (Random Access Memory), an SRAM (Static Random Access Memory), a ROM (Read-Only Memory), an EEPROM (Electrically Erasable Programmable Read-Only Memory), a PROM (Programmable Read-Only Memory), a magnetic memory, a magnetic disc, and an optical disc. The image outputting device 100 may be operated in association with a web storage performing the storage function of the memory 160 over the Internet.

The controller 180 typically controls the overall operation of the image outputting device 100. That is, the controller 180 may control the operation of each component of the image outputting device 100. As a specific example, the controller 180, when performing a dual-recording function for recording a viewer's image simultaneously with the content being reproduced, may control the display unit 151 and the sound output unit 152 in order to reproduce the content, control the camera 121 in order to obtain the viewer's image, and control the memory 160 in order to store the dual-recording function.

The controller 180 may include a plurality of sub control units for performing specified functions, respectively.

The power source unit 170 may receive internal or external power under the control of the controller 180 and may supply power necessary for operating the components.

Various embodiments as described herein may be implemented in a recording medium that may be read by a computer or a similar device using, e.g., software, hardware, or combinations thereof.

When implemented in hardware, the embodiments described herein may be realized using at least one of ASICs (Application Specific Integrated Circuits), DSPs (Digital Signal Processors), DSPDs (Digital Signal Processing Devices), PLDs (Programmable Logic Devices), FPGAs (Field Programmable Gate Arrays), processors, controllers, microcontrollers, micro-processors, and electrical units for performing the functions. In some cases, such embodiments may be implemented by the controller 180.

When implemented in software, the embodiments such as procedures or functions may be realized alongside a separate software module that enables at least one function or operation. The software codes may be implemented by a software application written in a proper programming language. Further, the software codes may be stored in the memory 160 and may be executed by the controller 180.

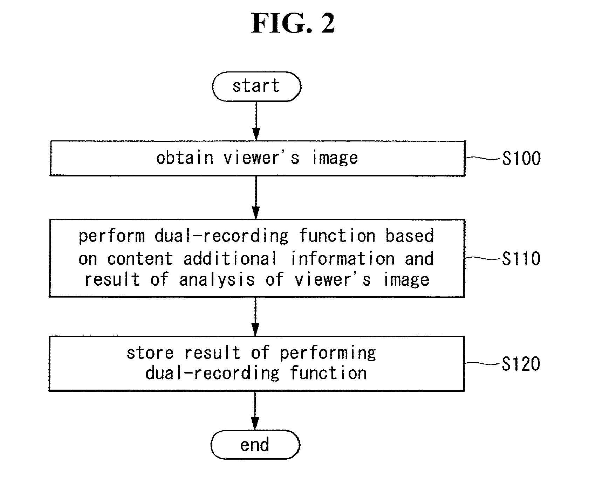

Fig. 2 is a flowchart illustrating an example method for driving an image outputting device according to the present invention, in order to perform a dual-recording function. Hereinafter, the driving method is described with reference to necessary views.

First, the concept of dual recording is described. A typical image outputting device provides a function of recording content being reproduced. However, the image outputting device 100 according to the present invention offers a dual-recording function that may obtain and record the viewer's image together with the content being reproduced.

The dual-recording function provided by the image outputting device 100 may be conducted in the form of the viewer's image being recorded while the content being reproduced is being recorded. Unlike this, the dual-recording function provided by the image outputting device 100 may be performed in the form of starting recording the viewer's image simultaneously with starting recording the content being reproduced when a specific condition is met.

In order to perform the dual-recording function, the controller 180 controls the camera 121 to obtain the viewer's image (S100). The controller 180 performs the dual-recording function based on a result of analysis for the viewer's image and additional information of the content being reproduced (S110).

Specific examples in which the dual-recording function is performed are described.

The controller 180 may perform the dual-recording function based on a highlight period contained in the additional information of the content being reproduced. For example, the period during which the dual-recording function is performed may be the same as a highlight period of the content being reproduced, part of the highlight period, or the highlight period plus a predetermined period coming before or after the highlight period.

The controller 180 may analyze caption information contained in the additional information of the content being reproduced, and as a result, may perform the dual-recording function based on a time corresponding to a specific word contained in the caption information. The word, as the basis for performing the dual-recording function, may be designated by the user. There may be a plurality of words that are the basis for performing the dual-recording function.

Further, in case the viewer makes a specific facial expression, the controller 180 may conduct the dual-recording function. For example, in case as a result of analyzing the viewer's image obtained by the camera 121, the user makes his facial expression corresponding to a specific facial expression such as smiling or crying, the controller 180 may perform the dual-recording function. Here, the period during which the dual-recording function is performed may be a period after such specific facial expression has been sensed.

Further, in case the result of analyzing the viewer's image obtained by the camera 121, the viewer makes a predetermined specific gesture, the controller 180 may perform the dual-recording function. The period during which the dual-recording function is performed may be a predetermined period after such specific gesture has been recognized.

Referring back to Fig. 1, the controller 180 stores a result of performing the dual-recording function in the memory 160 (S120). Here, the controller 180 may combine the recorded viewer's image and the recorded content image obtained as the result of performing the dual-recording function and store the combined result as a single image. In contrast, the controller 180 may also store the recorded content image independently from the recorded viewer's image. Such storing form may be varied depending on the user's configurations.

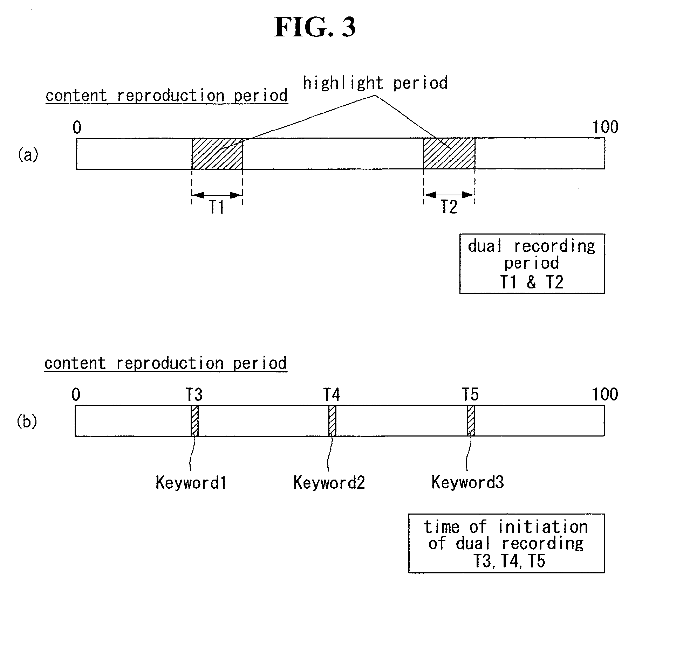

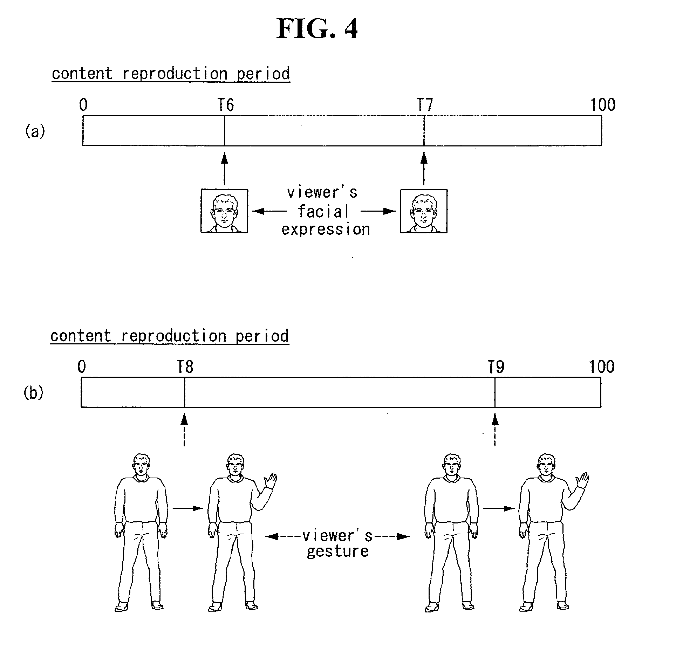

Figs. 3 and 4 show an example of performing a dual-recording function according to the method for driving the image outputting device as shown in Fig. 2.

Referring to Fig. 3(a), it can be seen that the image outputting device 100 may perform a dual-recording function during the periods T1 and T2 that are highlight periods among the content reproduction periods. The controller 180 may recognize the highlight periods of the content based on the additional information of the content being reproduced. Meanwhile, the image outputting device 100 may also perform the dual-recording function during a specific period designated by the user.

Referring to Fig. 3(b), it can be seen that the image outputting device 100 may initiate dual recording at the time that predetermined keywords are recognized. Such keywords may be the ones designated by the user. Meanwhile, the controller 180 may previously recognize the time that the keywords are recognized by analyzing the additional information of the content.

Referring to Fig. 4(a), it can be seen that the image outputting device 100 may perform the dual-recording function at the time that the viewer smiles. Meanwhile, according to configurations, the controller 180 may also perform the dual-recording function when the user frowns his face or makes a serious or crying look.

Referring to Fig. 4(b), it can be seen that the controller 180 may perform the dual-recording function when the user makes a gesture of raising his right hand. Meanwhile, the gesture, as a basis for performing the dual-recording function, is not limited thereto. Further, the viewer may configure a gesture that is a basis for performing the dual-recording function.

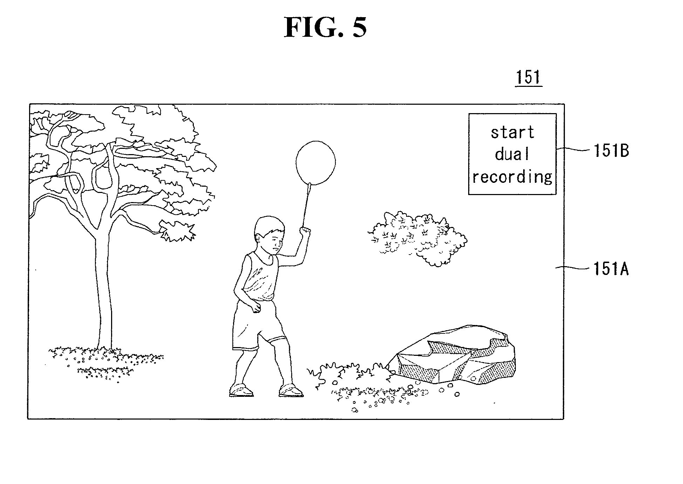

Figs. 5 to 7 illustrate example user interfaces provided while a dual-recording function is performed in an image outputting device 100 according to the present invention.

Referring to Fig. 5, it can be seen that the image outputting device 100, when the dual-recording function is initiated, may display a message 151B indicating the start of the dual recording on an image 151A of the content being reproduced.

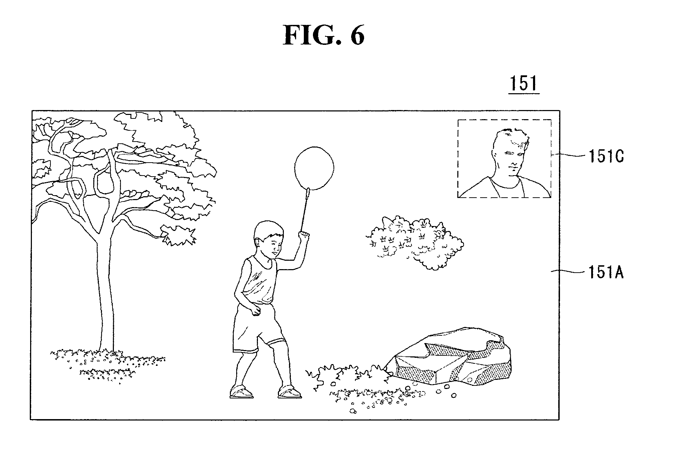

Referring to Fig. 6, it can be seen that while the dual-recording function is performed, the viewer's image 151C may be displayed on the image 151 A of the content being reproduced in the image outputting device 100 in the form of PIP (Picture In Picture). Meanwhile, the image outputting device 100 may display the viewer's image 151C on the display unit 151 even when the dual-recording function is not performed. Then, the viewer may view the content while watching the image obtained by taking a picture of him.

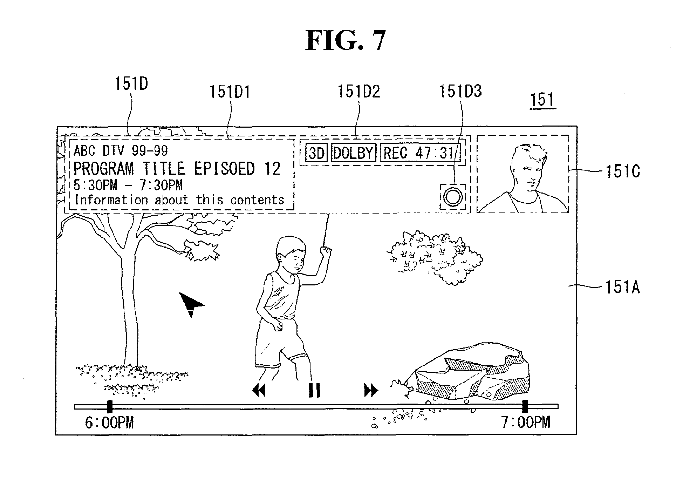

Referring to Fig. 7, it can be seen that, while performing the dual-recording function, the image outputting device 100 may display an information providing region 151 D based on the user's manipulation. As shown in Fig. 7, information 151D1 relating to the content being reproduced and an icon 151D2 indicating that the dual-recording function is being performed may be included in the information providing region 151D.

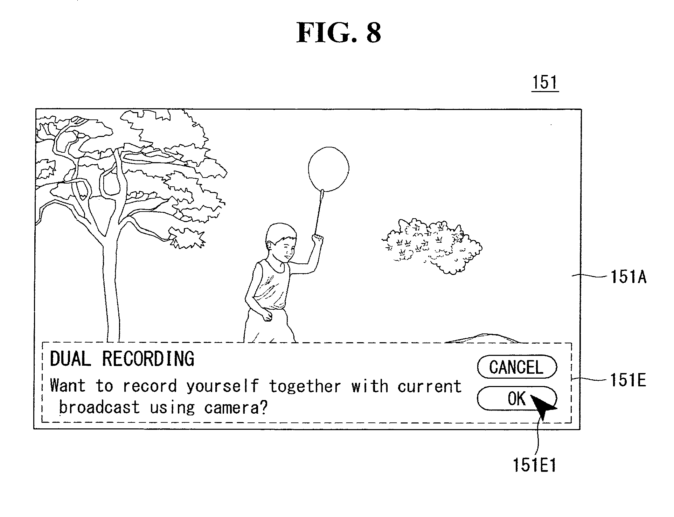

Fig. 8 shows a process of performing a dual-recording function based on a user's manipulation in an image outputting device 100 according to the present invention.

If the user chooses a dual-recording function button of a remote controller, as shown in Fig. 8, it can be seen that the controller 180 may display on the display unit 151 a message providing window for identifying whether the dual-recording function is performed. That is, the image outputting device 100 may automatically perform the dual-recording function based on the user's facial expression, gesture, or additional information and may also perform the dual-recording function based on the user's manipulation.

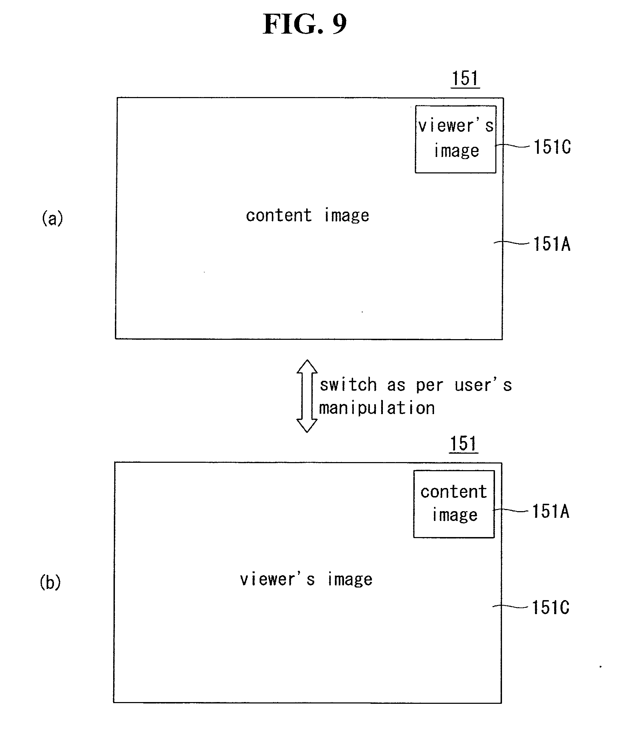

Fig. 9 shows a form in which a content image and a viewer's image are provided in an image outputting device 100 according to the present invention while a dual-recording function is performed.

Referring to Fig. 9, it can be seen that the image outputting device 100 may display the viewer's image 151C on the image 151A of the content being reproduced in the form of PIP and may display the image 151A of the content being reproduced on the viewer's image 151 C in the form of PIP. The image outputting device 100 may switch the two forms based on the user's manipulation.

Meanwhile, the form of providing the image 151A of the content being reproduced and the viewer's image 151C in the image outputting device 100 is not limited to what is shown in Fig. 9. For example, the image outputting device 100 may set up the region of displaying the image of the content being reproduced and the region of displaying the viewer's image separately from each other.

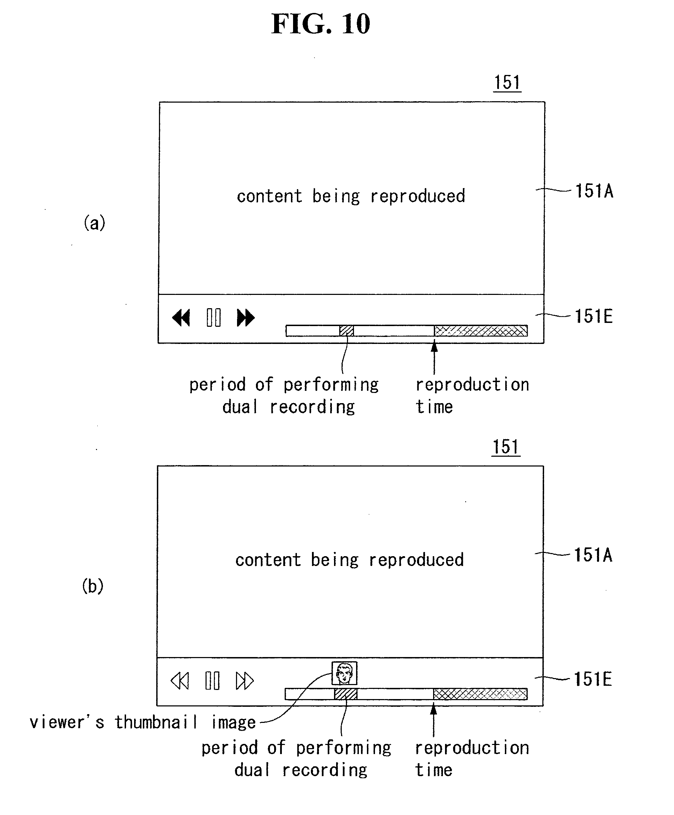

Fig. 10 shows examples of providing an indication means for indicating that a dual-recording function is performed in an image outputting device 100 according to the present invention.

Referring to Fig. 10(a), it can be seen that the image outputting device 100 displays a period during which the dual recording has been performed on a progress bar included in a control region 151E corresponding to the content being reproduced. Referring to Fig. 10(b), it can be seen that the image outputting device 100 provides a thumbnail image of the viewer on a region adjacent to the period during which the dual-recording function has been performed in the progress bar included in the control region 151 E corresponding to the content.

That is, the image outputting device 100, as described above in connection with Fig. 10, may display an indication means for indicating a time or period when the dual-recording function is performed, in association with the control region 151 E corresponding to the content being reproduced.

Meanwhile, in case the dual-recording function has been performed on a plurality of viewers, the image outputting device 100 may provide indication means for the viewers, respectively, to be identified from each other. For example, the image outputting device 100 may allow a first viewer and a second viewer from being identified from each other by using different colors or display positions corresponding to the first viewer and the second viewer, respectively.

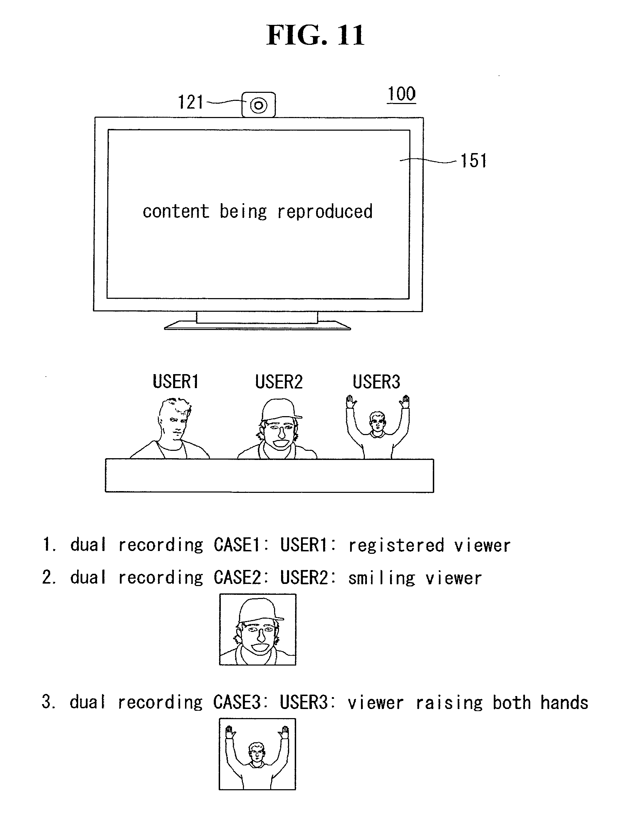

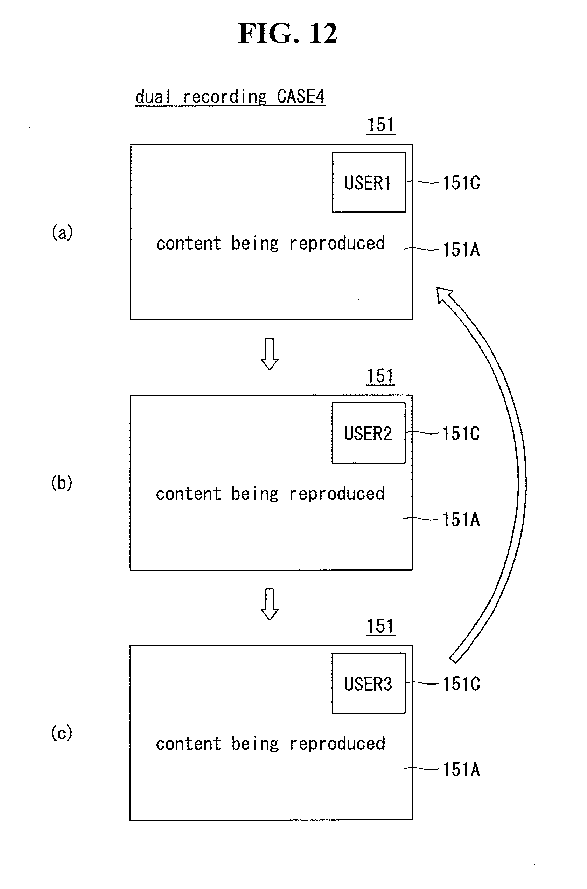

Figs. 11 and 12 show various forms of the dual-recording function performed in an image outputting device 100 according to the present invention in case a plurality of viewers are recognized.

The controller 180 may analyze viewer's images obtained through the camera 121 to recognize that a plurality of viewers USER1, USER2, and USER3 view a TV 100.

In case the plurality of viewers USER1, USER2, and USER3 are recognized, the controller 180 may perform the dual-recording function only on a viewer previously registered among them (CASE 1). Or, the controller 180 may perform the dual-recording function on a viewer USER2 making a 'smiling face' as predetermined among the plurality of viewers USER1, USER2, and USER3 (CASE2). Or, the controller 180 may perform the dual-recording function on a viewer USER3 raising both hands as a predetermined gesture among the plurality of viewers USES1, USER2, and USER3 (CASE 3).

Meanwhile, the controller 180, as shown in Fig. 11, may alternately perform the dual-recording function on the plurality of viewers USES1, USER2, and USER3 (CASE 4). In such case, the controller 180 may alternately provide images for the plurality of viewers USES1, USER2, and USER3, respectively, through the display unit 151.

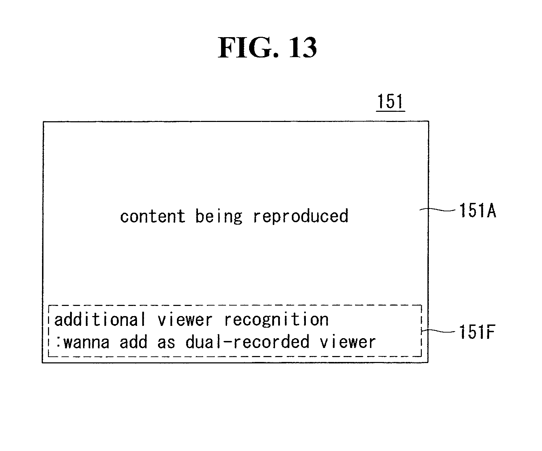

Fig. 13 shows a message provided from an image outputting device 100 according to the present invention in case an additional viewer is recognized.

Referring to Fig. 13, it can be seen that in case an additional viewer is recognized, the controller 180 of the image outputting device 100 may provide a message 151F inquiring about whether to add the additionally recognized viewer to be subjected to the dual-recording function. Unlike this, the controller 180 may immediately add the additionally recognized viewer to be subjected to the dual-recording function. The controller 180 may disregard the additionally recognized viewer.

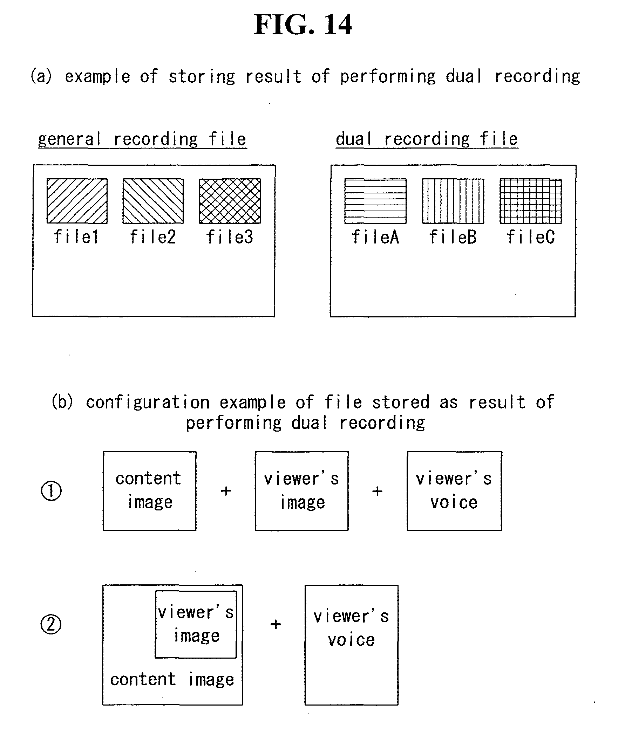

Fig. 14 shows an example of storing a result of performing a dual-recording function in an image outputting device 100 according to the present invention.

Referring to Fig. 14(a), it can be seen that the image outputting device 100 may assign a general recording file and a dual recording file in different storage locations, respectively.

Referring to Fig. 14(b), it can be seen that the file generated as a result of performing the dual-recording function comprises a content image, a viewer's image, and the viewer's sound as stored in the forms independent from each other. Further, it can be seen that the file generated as the result of performing the dual-recording function includes the content image and the viewer's image combined with each other and the viewer's sound.

Meanwhile, the viewer's sound is obtained through the microphone 122 while the dual-recording function is performed and is preferably stored separately from the content sound. This is why upon viewing the content, the main target for recording is not the viewer's sound but the sound signal of the content.

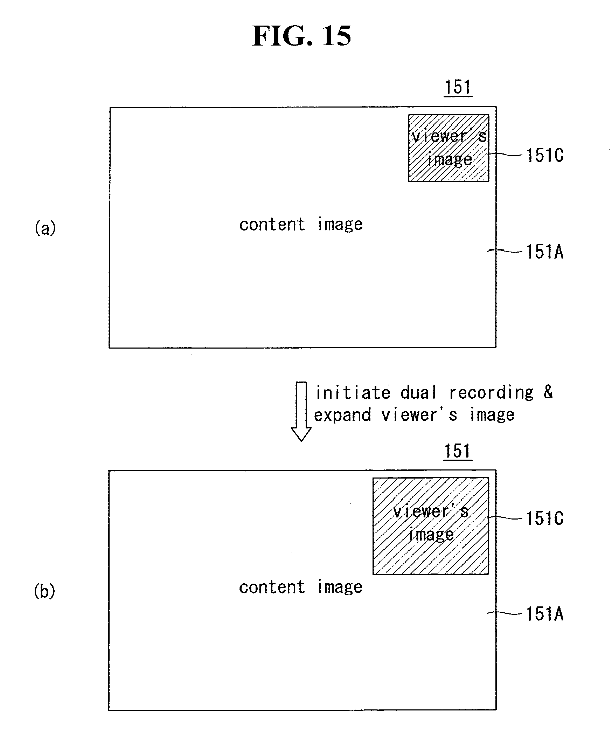

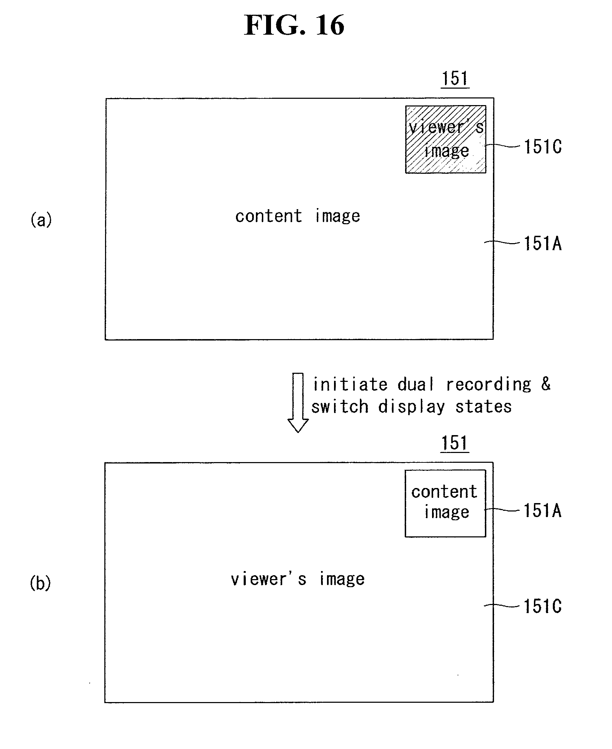

Figs. 15 and 16 show examples of changing the forms of displaying viewer's images in an image outputting device 100 according to the present invention in case a dual-recording function is performed.

Referring to Fig. 15, it can be seen that the image outputting device 100, when the dual-recording function is initiated, may expand and display the viewer's image 151C. Then, the viewer may intuitively recognize the dual recording being initiated. Meanwhile, the time during which the viewer's image 151C is expanded and displayed may be predetermined.

Referring to Fig. 16, the image outputting device 100 may primarily display the viewer's image 151C at the time of the dual recording being initiated and secondarily display the image 151 A of the content being reproduced. For example, the image outputting device 100 may display the image 151 A of the content being reproduced in the form of PIP for the viewer's image 151C for a predetermined time after the dual recording has been initiated.

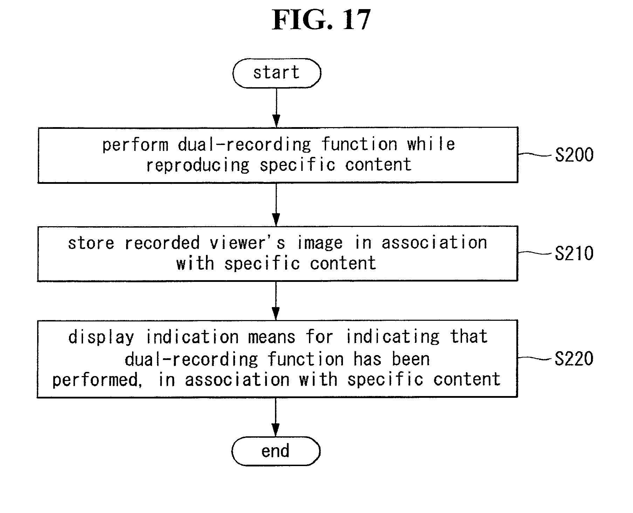

Fig. 17 is a flowchart illustrating an example method for driving an image outputting device according to the present invention in case a dual-recording function is performed on specific content and the specific content is reproduced. Hereinafter, the driving method is described with reference to necessary views.

First, while the specific content is being reproduced, the dual-recording function is performed (S200). As described above, the dual-recording function may be initiated by the user's manipulation or may be automatically initiated based on additional information on the specific content or user's facial expression or gesture.

If the dual-recording function is performed, the controller 180 associates the recorded viewer's image with the specific content and stores the associated result in the memory 160 (S210). Storing the recorded viewer's image in association with the specific convent may include temporal syncing between the obtained data and assigning association between the obtained data.

In case the recorded viewer's image is stored associated with the specific content and the specific content is then displayed or reproduced, the controller 180 may display, on the display unit 151 in association with the specific content, an indication means for indicating that the dual-recording function has been performed while the specific content is reproduced (S220).

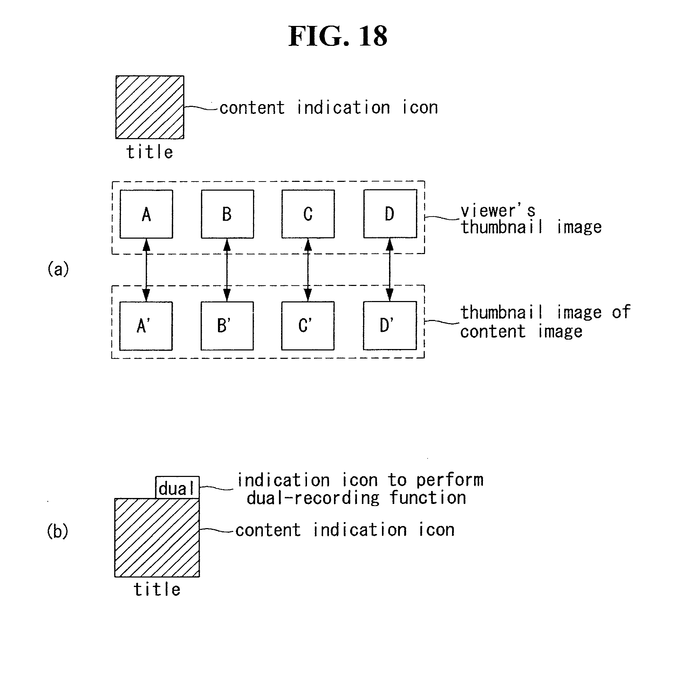

Fig. 18 shows examples of the indication means for the content that has gone through dual recording as provided from the image outputting device 100. For reference, the examples shown in Fig. 18 are example indication means offered when the content is simply searched rather than when the content is reproduced.

Referring to Fig. 18(a), it can be seen that the controller 180, in case the dual-recording function has been performed, may display the viewer's thumbnail image obtained upon dual recording together with the icon indicating the content and a thumbnail image of the content corresponding thereto. In some cases, the controller 180 may provide only the viewer's thumbnail image obtained upon dual recording.

Referring to Fig. 18(b), it can be seen that the controller 180 may provide an icon indicating that the dual-recording function has been performed at a region adjacent to an icon indicating the content. Meanwhile, the examples of the indication means for indicating the dual recording are not limited to the example indication means shown in Fig. 18.

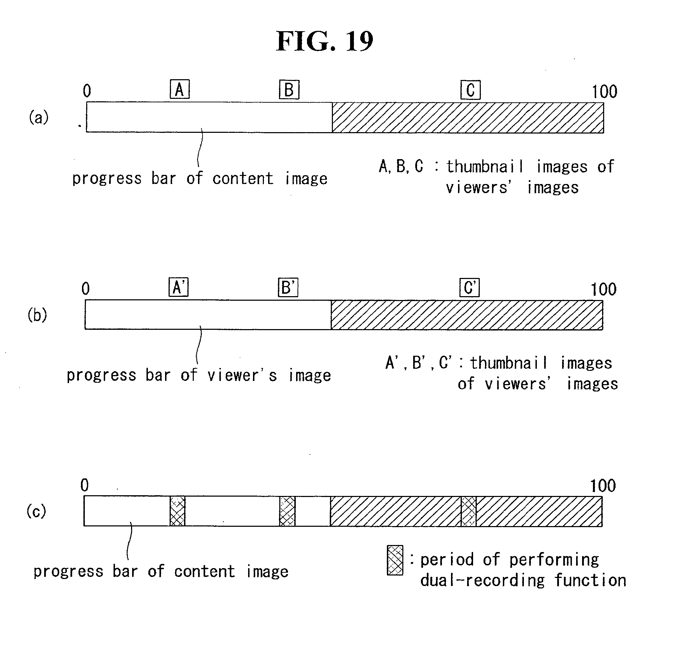

Fig. 19 shows example indication means for indicating performing a dual-recording function provided from an image outputting device 100 according to the present invention in case the dual-recording function is performed while specific content is reproduced and then the content is reproduced.

Referring to Fig. 19(a), in case the specific content is reproduced, it can be seen that the image outputting device 100 may provide a thumbnail image of a viewer's image at a region adjacent to the period during which the dual-recording function has been performed on a progress bar, as an indication means for indicating that the dual-recording function is performed.

Referring to Fig. 19(b), in case the specific content is reproduced, it can be seen that the image outputting device 100 may provide a thumbnail image of the content image corresponding to the time of obtaining the thumbnail image of the viewer's image at a region adjacent to the period during which the dual-recording function has been performed on the progress bar, as an indication means for indicating that the dual-recording function is performed.

Referring to Fig. 19(c), in case the specific content is reproduced, the image outputting device 100 may indicate the period during which the dual-recording function has been performed by displaying the period during which the dual-recording function has been performed in such a manner that the period is visually different from the other.

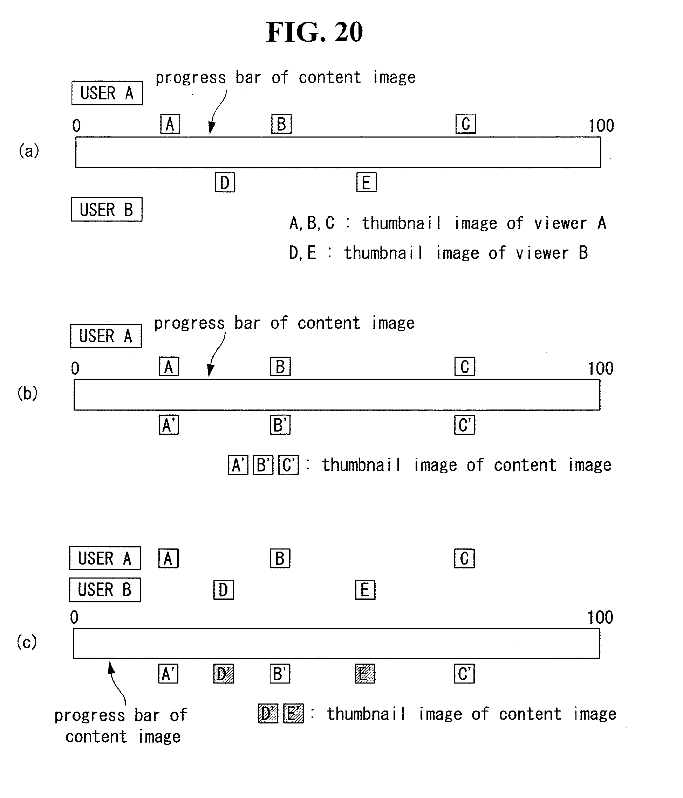

Fig. 20 shows various examples of indicating performing a dual-recording function in an image outputting device 100 according to the present invention in case the dual-recording function has been performed targeting a plurality of viewers.

Referring to Fig. 20(a), the image outputting device 100 may display a thumbnail image of a first viewer USER A on an upper end of the progress bar while displaying a thumbnail image of a second viewer USER B on a lower end of the progress bar. Although not shown in the drawings, the image outputting device 100 may make the indication means for each viewer distinguished from the indication means for another by using different colors or forms respectively corresponding to the viewers.

Referring to Fig. 20(b), the image outputting device 100 may display a thumbnail image of a specific viewer USER A on an upper end of a progress bar of a content image while displaying a thumbnail image of the content image on a lower end of the progress bar. The example shown in Fig. 20(b) may be the one for the case where the dual recording has been performed on the specific viewer USER A only, rather than a plurality of viewers.

Referring to Fig. 20(c), the image outputting device 100 may display the thumbnail images of the viewers USER A and USER B on an upper end of the progress bar of the content image and display the thumbnail images of the content images corresponding to the thumbnail images of the viewers USER A and USER B on a lower end of the progress bar.

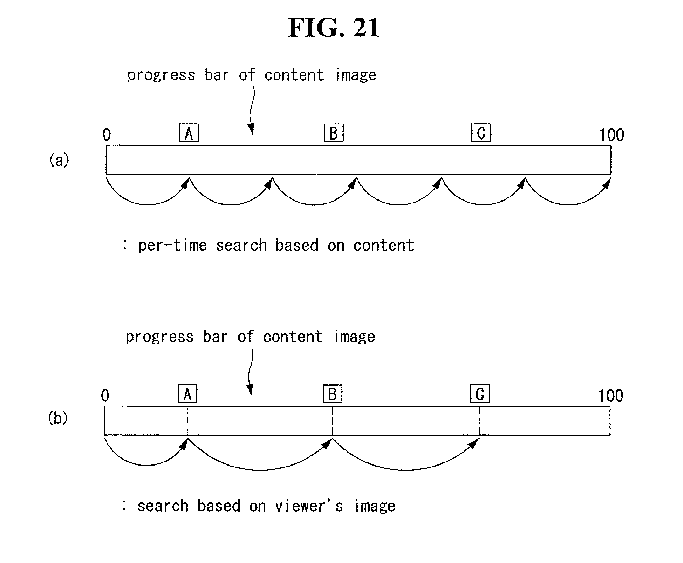

Fig. 21 shows example searching functions provided from an image outputting device 100 according to the present invention.

Referring to Fig. 21(a), it can be seen that the image outputting device 100 provides a searching function on a per-predetermined time basis with respect to the content. Meanwhile, the image outputting device 100 may also provide a searching function on a per-predetermined time basis for the viewer's image.

Referring to Fig. 21(b), it can be seen that the image outputting device 100 may provide a searching function on a content image based on a time corresponding to a viewer's thumbnail image obtained as a result of performing a dual-recording function. Meanwhile, although not shown in the drawings, the image outputting device 100 may also provide a searching function on a viewer's image based on a time corresponding to the viewer's thumbnail image obtained as a result of performing the dual-recording function.

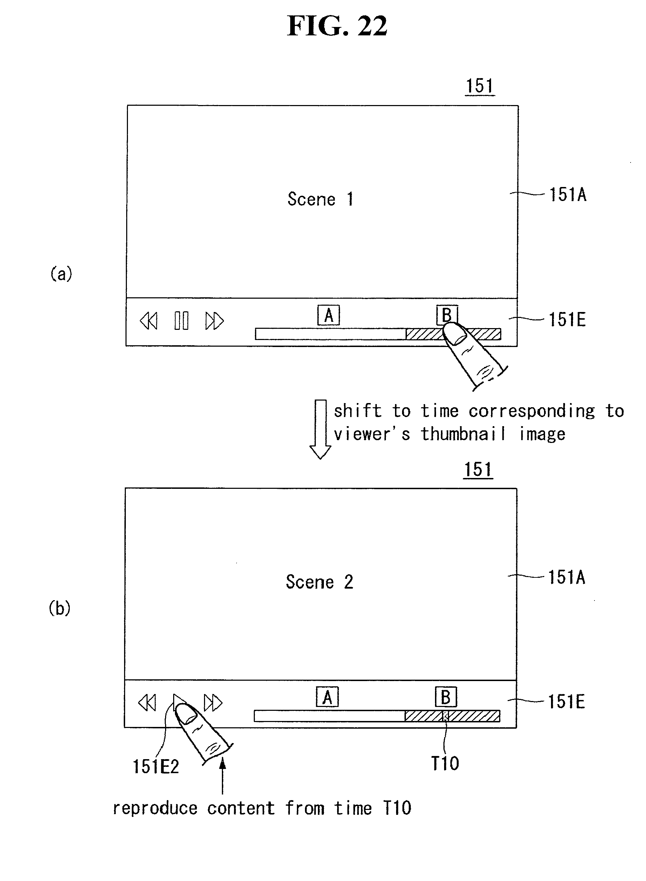

Fig. 22 shows an example searching function provided from an image outputting device 100 according to the present invention.

Fig. 22(a) shows an example in which a viewer selects the viewer's thumbnail image provided as an indication means in case specific content is reproduced after a dual-recording function is performed while the specific content is being reproduced.

It can be seen as shown in Fig. 22(b) that the controller 180 then performs a searching function on an image corresponding to a thumbnail image selected among the images of the specific content. Accordingly, the image displayed on the display unit 151 is changed from scene 1 to scene 2.

Under such state, as shown in Fig. 22(b), if a reproduction button 151E2 is selected, the controller 180 may reproduce the specific content from the searched time. In contrast, the controller 180 may also reproduce the specific content immediately from the searched time.

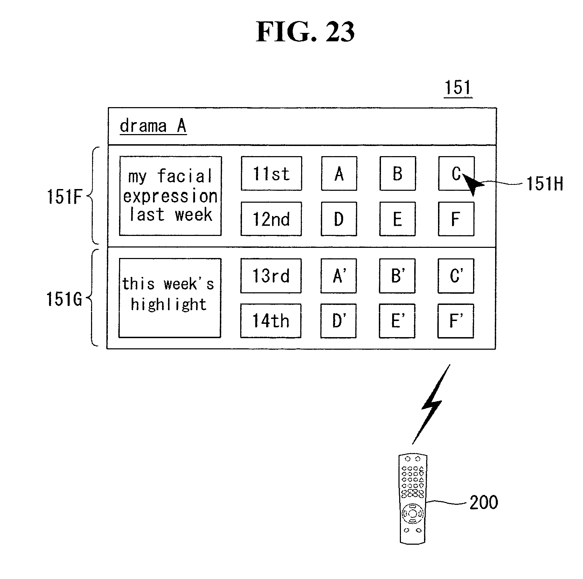

Fig. 23 shows an example dual-recording function-related function provided from an image outputting device 100 according to the present invention.

Referring to Fig. 23, it can be seen that the image outputting device 100 may provide a viewer thumbnail image 151 obtained as a result of performing a dual-recording function on a drama episode already viewed, in case the viewer desires to view a specific drama. In this case, the viewer may control the position of a cursor 151H through a remote controller piece and select a specific thumbnail image. The image outputting device 100 may then provide a content image or viewer's image corresponding to the selected thumbnail image.

Meanwhile, the image outputting device 100 may provide a highlight image 151 G for this week's drama episode.

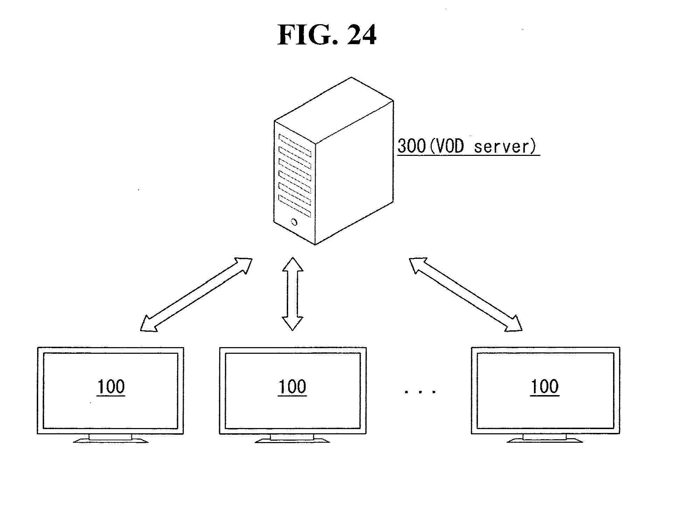

Fig. 24 is a view illustrating the configuration of a content providing system according to the present invention. Referring to Fig. 24, the system may include a VOD providing server 300 and a plurality of image outputting devices 100 connected with the VOD providing server 300. The image outputting devices 100 may provide a dual-recording function as described above.

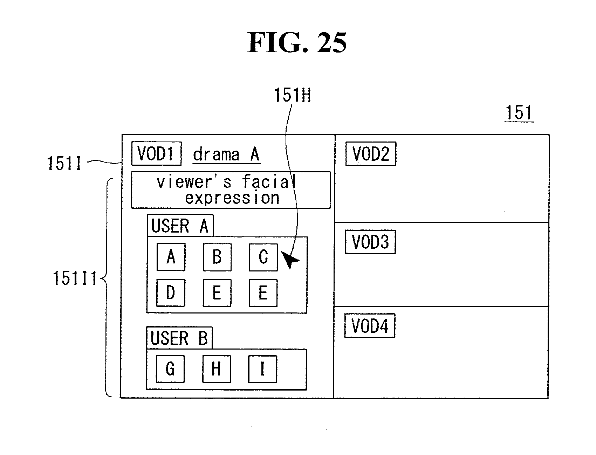

Fig. 25 shows an example in which an image outputting device 100 according to the present invention displays a result 151I of performing a dual-recording function on a plurality of viewers for a specific drama in interoperation with the VOD providing server 300.

Referring to Fig. 25, it can be seen that the image outputting device 100 may receive thumbnail images 151I1 for the viewers, obtained as a result of performing the dual-recording function on the specific drama, from the VOD providing server 300 and display the thumbnail images on the display unit 151. The plurality of viewers may be viewers registered as acquaintances of the viewer of the image outputting device 100. Such acquaintance registration may be conducted based on the acquaintance relationship on an SNS service or may be based on the acquaintance relationship on the viewer's cell phone or smartphone.

The viewer of the image outputting device 100 may then refer to the facial expressions made by the plurality of viewers when watching the specific drama in determining whether to view the drama.

Meanwhile, although not shown in the drawings, the image outputting device 100 may also receive, from the VOD providing server 300, various dual recording-related data other than the facial expressions made by the plurality of viewers while watching the specific drama and may provide the data.

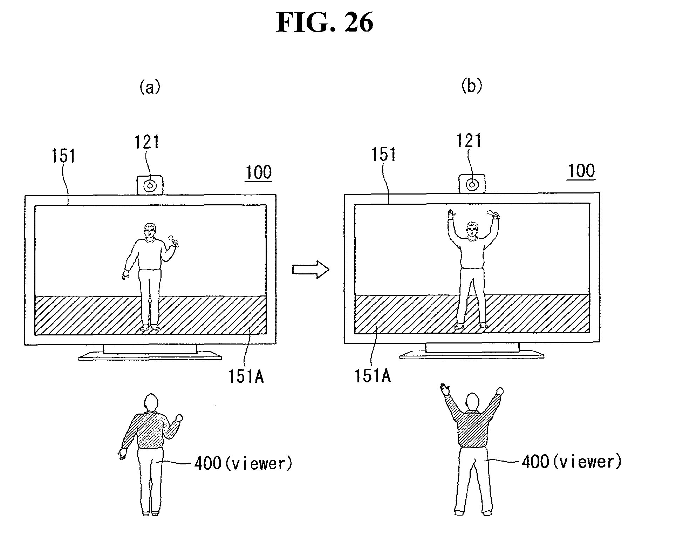

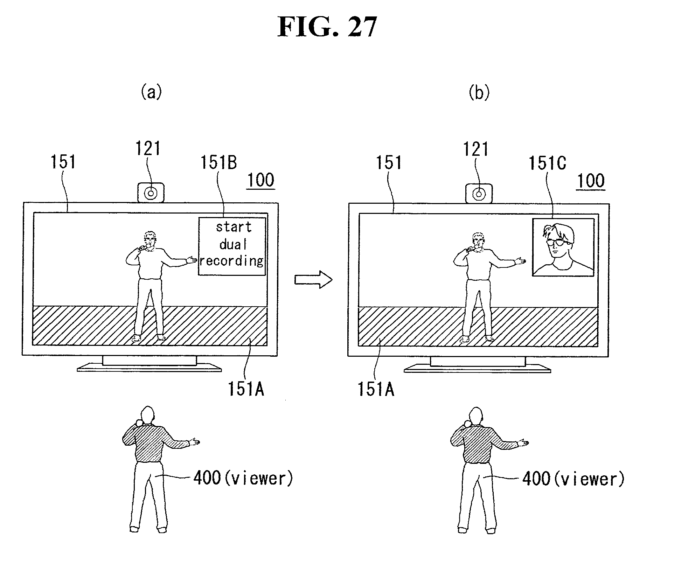

Figs. 26 and 27 show an example of automatically performing a dual-recording function in an image outputting device 100 according to the present invention.

Referring to Fig. 26(a) and (b), it can be seen that a viewer 400 copies the behavior of a specific human being, contained in the image of the specific content displayed on the display unit 151 of the image outputting device 100. In this case, the image outputting device 100 may analyze the image obtained through the camera 121 to recognize that the viewer 400 copies the behavior of the specific human being.

Upon recognizing that the viewer 400 copies the behavior of the specific human being, the image outputting device 100 may automatically execute a dual-recording function. At this time, the image outputting device 100 may display on the screen 151 a message 151B indicating that the dual recording is initiated, as shown in Fig. 27(a).

Then, the image outputting device 100 may display on the screen 151 of the image outputting device 100 a captured image 151C of the viewer 400, obtained through the camera 121, as shown in Fig. 27(b).

Meanwhile, although not shown in the drawings, the image outputting device 100 may automatically perform the dual-recording function in case the specific human being displayed on the screen 151 makes a predetermined behavior.

Each of the methods of driving a mobile terminal according to the present invention, as described above, may be implemented in a program that may be executed by various computing means and may be recorded in a computer readable medium. The computer readable medium may include, alone or in combination, a program command, a data file, and/or a data architecture. The program recorded in the medium may be specially designed or configured for the present invention or may be known to those of ordinary skill in the computer software art.

The computer readable recording medium may include, for example, magnetic media, such as hard disks, floppy disks, and magnetic tapes, optical recording media, such as CD-ROMs and DVDs, magneto-optical media such as floptical disks, ROMs, RAMs, flash memories, and other hardware devices specially configured to store and execute program commands. The program may include, for example, machine language codes created by a compiler, as well as high level language codes that may be executed by a computer using an interpreter. The hardware devices may be configured in one or more software modules for performing the operation according to the present invention, and vice versa.

Although embodiments of the present invention have been described, it will be understood by those of ordinary skill in the art that various changes in form and detail may be made thereto without departing from the scope of the present invention defined by the following claims.

Thus, the scope of the present invention should be limited to the embodiments set forth herein and should rather be determined by the following claims and equivalents thereof.

## Claims

1. An image outputting device, comprising:
a camera configured to obtain a viewer's image;
an output unit configured to reproduce content; and
a controller configured to perform a dual-recording function on the viewer's image and content being reproduced through the output unit, based on at least one of additional information of the content being reproduced and a result of analyzing the viewer's image obtained.

2. The image outputting device of claim 1, wherein the controller is configured to determine a period during which the dual-recording function is performed, based on a highlight period contained in the additional information of the content being reproduced.

3. The image outputting device as claimed in any one of claims 1 or 2, wherein the controller is configured to determine the period during which the dual-recording function is performed, based on a time of reproducing the content being reproduced, corresponding to predetermined specific text in caption information contained in the additional information of the content being reproduced.

4. The image outputting device as claimed in any one of claims 1 to 3, wherein the controller is configured to perform the dual-recording function when, as the result of analyzing the viewer's image, the viewer's predetermined facial expression or gesture is recognized.

5. The image outputting device as claimed in any one of claims 2 to 4, wherein the controller is configured to display an indication means for indicating a time or period when the dual-recording function is performed, in association with a control region corresponding to the content being reproduced.

6. The image outputting device of claim 5, further comprising a microphone, wherein the controller is configured to further record a sound signal received through the microphone during the period when the dual-recording function is performed and is configured to store the recorded sound signal separately from a sound signal of the content being reproduced.

7. The image outputting device as claimed in any one of claims 5 to 6, wherein the controller is configured to store the viewer's image recorded as a result of performing the dual-recording function in combination with an image of the content being reproduced or independently from the content being reproduced, according to configurations.

8. The image outputting device as claimed in any one of claims 5 to 7, wherein when a plurality of viewers are recognized as the result of analyzing the image obtained through the camera, the controller is configured to perform the dual-recording function on a viewer making a specific facial expression or a specific gesture among the plurality of viewers or to alternately perform the dual-recording function on the plurality of viewers.

9. The image outputting device as claimed in any one of claims 1 to 8, wherein the controller is configured to display on a display unit the viewer's image obtained by the camera together with the content being reproduced and is configured to change a form in which the viewer's image is displayed at a time or period of performing the dual-recording function.

10. An image outputting device, comprising:
a memory;
a user input unit;
a camera configured to obtain a viewer's image;
an output unit configured to reproduce content; and
a controller configured to perform a dual-recording function on specific content being reproduced through the output unit and the viewer's image, to store the viewer's image recorded as a result of performing the dual-recording function in the memory in association with the specific content, and to display on a display unit included in the output unit an indication means for indicating that the dual-recording function has been performed, in association with the specific content.

11. The image outputting device of claim 10, wherein when the specific content is reproduced, the controller is configured to display an indication means for indicating that there is a viewer's image recorded in association with the specific content, on a control region corresponding to the specific content.

12. The image outputting device of claim 11, wherein the controller is configured to provide a thumbnail image corresponding to the recorded viewer's image, on a region adjacent to a progress bar corresponding to a region corresponding to a time or period of recording the viewer's image as the dual-recording function is performed.

13. The image outputting device as claimed in any one of claims 11 or 12, wherein as the dual-recording function is performed, the controller is configured to display a progress bar in such a manner that a portion of the progress bar, corresponding to a time or period of recording the viewer's image, is visually distinguished from another portion of the progress bar.

14. The image outputting device as claimed in any one of claims 11 to 13, wherein the controller is configured to provide a searching function on the recorded viewer's image and the specific content based on selection of the indication means.

15. The image outputting device as claimed in any one of claims 10 to 14, wherein when the dual-recording function has been performed on a plurality of viewers, the controller is configured to provide respective indication means for the plurality of viewers in such a manner that the indication means are distinguished from each other.
